# EUROPEAN PATENT APPLICATION

(11) **EP 4 354 593 A1**
(43) Date of publication of application: **17.04.2024**
(21) Application number: 22306539.2
(22) Date of filing: 12.10.2022
(51) Int. Cl.: H01M 10/613, H01M 10/617, H01M 10/625, H01M 10/647, H01M 10/6552, H01M 10/6554, H01M 10/6557, H01M 10/6562, H01M 10/6568, H01M 10/6569, H01M 50/103, H01M 50/209, F28D 15/02, H01M 10/052

(54) **BATTERY FOR AN ELECTRICAL OR HYBRID VEHICLE, COMPRISING LOOP OR OSCILLATING HEAT PIPES, OR HEAT PIPES**

(71) Applicant: Automotive Cells Company SE, 92300 Levallois Perret (FR)
(72) Inventor: ALI, Sikandar, 33320 EYSINES (FR); SIBONI, Laurent, 33160 ST-MEDARD EN JALLES (FR); MATHIEU, Alexandre, 33300 BORDEAUX (FR); NACEREDDINE, Rabia, 33300 BORDEAUX (FR)
(74) Representative: Lavoix

(57) **Abstract**

A battery for an electrical or hybrid vehicle, comprising:
- a cooling plate,
- a set of electrochemical cells (14B),
each of the electrochemical cells including:
- a stack of electrochemical elements,
- a casing (24) comprising a first part (26) and a second part (28) opposite each other, and a third part (30) and a fourth part (32) opposite each other,
- a first plate (34) formed by, or in plane contact with the first part, and in thermal contact with the stack,
- a second plate (36) formed by, or in plane contact with the third part, and in thermal contact with the stack and the cooling plate,
- a first passive cooling system (40) comprising at least a loop heat pipe (42), an oscillating heat pipe, or a heat pipe, comprising an evaporator (44) in the first plate and a condenser (46) in the second plate.

## Description

The present invention deals with a battery for an electrical or hybrid vehicle, the battery having internal cooling means.

It also deals with a process for cooling such a battery.

The term "battery" means a plurality of electrochemical cells electrically connected to each other. According to a particular example of battery, the plurality of electrochemical cells is arranged in the form of one or more module(s), each module comprising several electrochemical cells electrically connected to each other and mechanically assembled to each other by a system of assembly, such as assembly plates. An electrochemical cell comprises, in particular, a plurality of positive electrodes intertwined with negative electrodes and separators, known as a "stack". The positive electrodes are connected to each other and to a positive terminal of the cell, and the negative electrodes are connected to each other and to a negative terminal of the cell.

When the battery operates, in particular during charging, it may produce excessive heat which has to be evacuated in order to avoid damaging the battery elements or risking a thermal runaway of the battery.

Generally, large cooling plates are installed at the bottom of the modules in most of automotive applications. Heat is removed from the bottom of the battery, whereas its top side remains dependent on the bottom cooling plate. This creates a huge temperature gradient, with a risk of hot spots in some of the electrochemical cells.

While there are also some cases where cooling plates are installed in between the battery cells, these cases need extra fluid circulation and pump power to circulate the liquid in order to remove the heat. However, these solutions are either expensive or unable to provide a temperature distribution in battery cells that is homogenous enough, in particular when the battery undergoes a fast charge.

An aim of the invention is to solve or improve the above issues, in particular to avoid hot spots or strong temperature gradients in the battery cells, while keeping the battery compact (with a high energy density) and at an interesting cost.

To this end, the invention proposes a battery for an electrical or hybrid vehicle, the battery comprising:
- a cooling plate extending along a first direction and a second direction perpendicular to the first direction, and
- at least a set of electrochemical cells extending successively along the second direction,
each of the electrochemical cells including:
- at least a stack of electrochemical elements and an electrolyte,
- a casing surrounding the stack and the electrolyte, and comprising a first part and a second part opposite each other in one of the second direction and the first direction, and a third part and a fourth part opposite each other in a third direction perpendicular to the first direction and to the second direction,
- a first plate either formed by the first part, or in plane contact with the first part, the first plate being in thermal contact with the stack and the electrolyte and adapted for receiving heat from the stack and the electrolyte,
- a second plate either formed by the third part, or in plane contact with the third part, the second plate being in thermal contact with the stack and the electrolyte and adapted for receiving heat from the stack and the electrolyte, the cooling plate being in thermal contact with the second plate and adapted for receiving heat from the second plate, and
- a first passive cooling system comprising at least a loop heat pipe, an oscillating heat pipe, or a heat pipe, the first passive cooling system comprising an evaporator located in the first plate and adapted for absorbing heat from the first plate, and a condenser located in the second plate and adapted for releasing heat to the second plate.

In other embodiments, the battery comprises one or several of the following features, taken in isolation or any technically feasible combination:
- the battery further comprises an active cooling system adapted for extracting heat from the cooling plate;
- the first plate and the second plate are both distinct from the casing, and altogether have an L-shape in view along the other of the second direction and the first direction;
- each of the electrochemical cells further includes at least a phase change material within the first plate and the second plate, the phase change material has a melting temperature comprised between 10°C and 120°C;
- the first plate and the second plate, considered as a whole, comprise an internal wall and an external wall with respect to the stack and the electrolyte, the internal wall and the external wall defining, between themselves, an inner volume extending in the first plate and in the second plate, the phase change material extending in the inner volume in the first plate and in the second plate;
- the first plate and the second plate, considered as a whole, comprise another wall extending along a path of a fluid of the loop heat pipe, the oscillating heat pipe or the heat pipe, the other wall having a U-shaped cross-section perpendicularly to the path, and being fixed to the internal wall or the external wall so as to form a duct for the fluid;
- the first passive cooling system comprises a duct and a fluid adapted for circulating in the duct from the evaporator to the condenser, and from the condenser to the evaporator, the duct comprising, in the evaporator and the condenser, successive sections from a fluid circulation point of view, and U-shaped sections in view along said one of the second direction and the first direction, the successive sections extending along said other one of the second direction and the first direction and being connected to each other by the U-shaped sections;
- the evaporator extends in a portion of the first plate, said portion being closer to the fourth part than to the third part along the third direction;
- the first plate has a thickness along said one of the second direction and the first direction, and the second part has a thickness along said one of the second direction and the first direction, the thickness of the first plate being larger than the thickness of the second part; and the second plate has a thickness along the third direction, and the fourth part has a thickness along the third direction, the thickness of the second plate being larger than the thickness of the fourth part;
- the first part and the second part are opposite each other in the second direction; and for any two successive electrochemical cells of the electrochemical cells of said set, the first plate of one of said two successive electrochemical cells is in thermal contact with the second part of the casing of the other one of said two successive electrochemical cells;
- the first part and the second part are opposite each other in the first direction, the first passive cooling system comprising a heat pipe;
- each of the electrochemical cells further comprises: a third plate either formed by the second part or in plane contact with the second part, the third plate being in thermal contact with the stack and the electrolyte, and adapted for receiving heat from the stack or the electrolyte; and a second passive cooling system comprising a heat pipe, the second passive cooling system comprising an evaporator located in the third plate and adapted for absorbing heat from the third plate, and a condenser located in the second plate and adapted for releasing heat to the second plate;
- the heat pipe of the first passive cooling system comprises a duct and a fluid adapted for circulating in the duct, the duct having a section in the condenser of the first passive cooling system, said section extending in the first direction, and a U-shaped section in view along the first direction, the U-shaped section being located in the evaporator of the first passive cooling system, the "U" of the U-shaped section having a base pointing away from the third part in the third direction; and
- the evaporator of the first passive cooling system extends in a portion of the first plate, said portion being closer to the fourth part than to the third part along the third direction.

The invention also deals with a process for cooling a battery comprising:
- providing a battery as described above,
- a step of receiving heat by the first plate and the second plate from the stack and the electrolyte,
- a step of absorbing heat by the evaporator of the first passive cooling system from the first plate,
- a step of releasing heat by the condenser of the first passive cooling system to the second plate, and
- a step of receiving heat by the cooling plate from the second plate.

The invention and its advantages will be better understood upon reading the following description, given solely by way of example and with reference to the appended drawings, in which:
- Figure 1 is a schematic, partial, perspective view of a battery according to the invention, the battery being cut along a plane,
- Figure 2 is a detail view of the battery shown in Figure 1, centered on a duct of the first passive cooling system in the cut,
- Figure 3 is a schematic, perspective view of the casing of an electrochemical cell of the battery shown in Figures 1 and 2, the casing being made transparent in order to show the first passive cooling system entirely, and
- Figure 4 is a schematic, perspective view of the casing of an electrochemical cell of a battery according to a variant of the battery shown in Figures 1 to 3, the casing being made transparent in order to show the first and a second passive cooling systems.

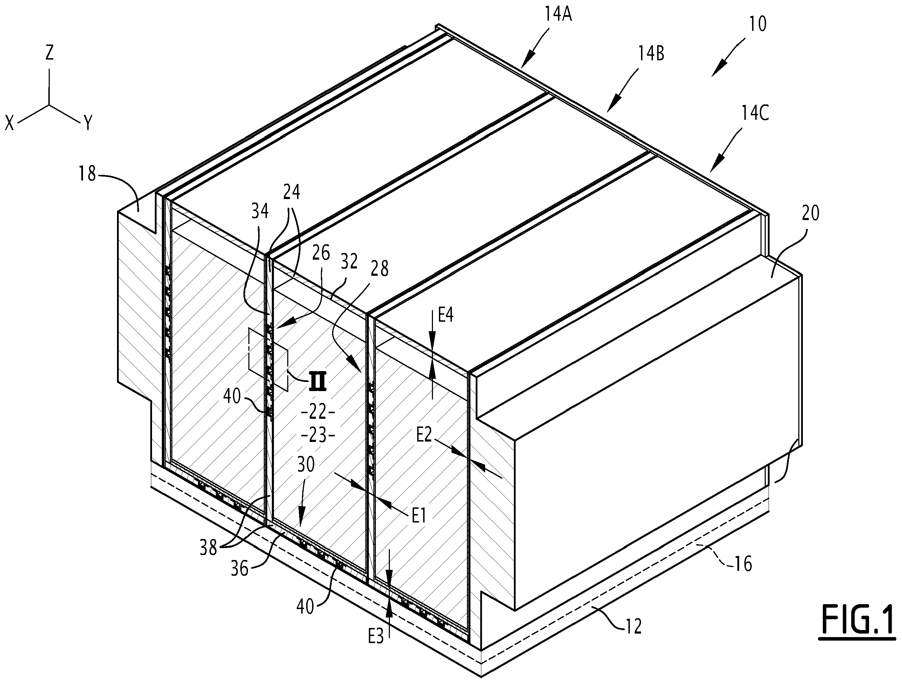

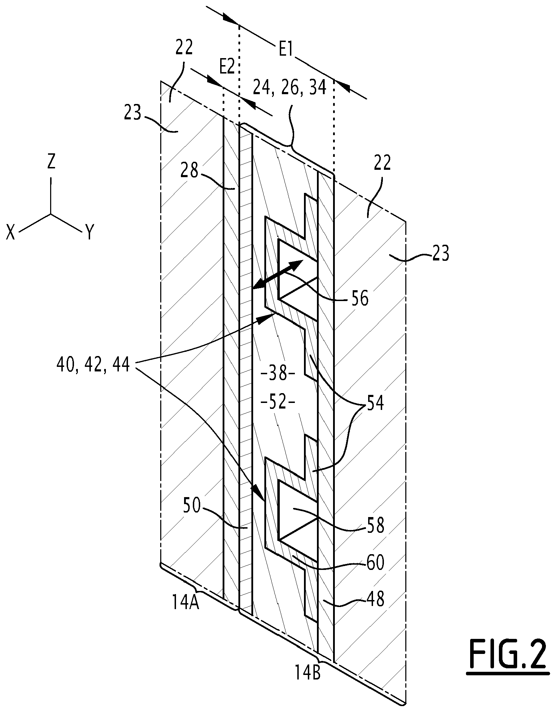

With reference to Figures 1 to 3, a battery 10 according to the invention will be described.

The battery 10 is for example intended for an electrical or hybrid vehicle (not shown).

The battery 10 is partially represented. For example, a general casing, potential crossbeams or other assembly elements, and electrical contacts, which may be present in the battery 10, are not shown.

As shown in Figure 1, the battery 10 comprises a cooling plate 12 extending along a first direction X and a second direction Y perpendicular to the first direction X, and at least a set of electrochemical cells 14A, 14B, 14C extending successively along the second direction Y.

The first direction X and the second direction Y are for example horizontal. The first direction X is for example the longitudinal (driving) direction of the vehicle.

A third direction Z is also defined as perpendicular to the first direction X and to the second direction Y. The third direction Z is for example approximately vertical when the vehicle moves horizontally.

In a preferred embodiment, the battery 10 also comprises an active cooling system 16 adapted for extracting heat from the cooling plate 12.

By "active" it is meant that the cooling system 16 includes an energy consuming device (not shown), for example a pump, to displace a refrigerant fluid (not shown) of the cooling system.

The refrigerant fluid is adapted for circulating in the cooling plate 12.

As a less preferred variant, the battery 10 does not include an active cooling system to cool the cooling plate 12, but instead a passive one (not shown), such as cooling fins.

In the example, the battery 10 also comprises two end plates 18, 20.

The cooling plate 12 is for example located at the bottom of the battery 10. The cooling plate 12 may be part of a general casing (not shown) of the battery, or may be separate from a general casing.

The cooling plate 12 is in thermal contact, preferably in physical plane contact, with each of the electrochemical cells 14A, 14B, 14C and adapted for receiving heat from the electrochemical cells.

Advantageously, the electrochemical cells 14A, 14B, 14C of the set are structurally analogous to each other, so only the electrochemical cell 14B will be described hereafter.

The electrochemical cell 14B includes at least a stack 22 of electrochemical elements, an electrolyte 23, and a casing 24 surrounding the stack 22 and the electrolyte 23 and comprising a first part 26 and a second part 28 opposite each other in the second direction Y (Figures 1 to 3), and a third part 30 and a fourth part 32 opposite each other in the third direction Z. The electrochemical cell 14B comprises a first plate 34 advantageously formed by the first part 26, and a second plate 36 advantageously formed by the third part 30, the first plate and the second plate being in thermal contact with the stack 22 and the electrolyte 23 and adapted for receiving heat from the stack 22 or the electrolyte 23.

The electrochemical cell 14B advantageously comprises at least a phase change material 38 within the first plate 34 and the second plate 36.

The electrochemical cell 14B comprises a first passive cooling system 40 comprising at least a loop heat pipe 42 having an evaporator 44 located in the first plate 34 and a condenser 46 located in the second plate 36. For example, the phase change material 38 fills the remaining space in the first plate 34 and the second plate 36 (around the first passive cooling system 40).

In the casing 24, the first part 26 and the second part 28 are for example parallel to each other, and the third part 30 and the fourth part 32 are for example parallel to each other. The casing 24 for example has a parallelepiped shape.

The first plate 34 and the second plate 36 are adapted for receiving heat from the stack 22 and the electrolyte 23, the cooling plate 12 being in thermal contact with the second plate 36 and adapted for receiving heat from the second plate.

The first plate 34 and the second plate 36 are for example rectangular, and advantageously perpendicular to each other.

Advantageously, for any two successive electrochemical cells 14A/14B or 14B/14C of the set, the first plate 34 of one of said electrochemical two cells is in thermal contact, and preferably in plane contact, with the second part 28 of the casing of the other one of said two electrochemical cells. In other words, the electrochemical cells 14A, 14B, 14C are in thermal contact two by two. This allows the first plate 34 of the electrochemical cells 14B, 14C absorbing heat from the casing 24 of the neighboring electrochemical cells 14A, 14B respectively.

In a particular embodiment, the first plate 34 and the second plate 36, considered as a whole, comprise an internal wall 48 and an external wall 50 with respect to the stack 22 and the electrolyte 23, the internal wall and the external wall defining, between themselves, an inner volume 52 extending in the first plate 34 and in the second plate 36.

For example, the first plate 34 and the second plate 36, considered as a whole, comprise another wall 54 extending along a path 56 of a fluid 58 of the loop heat pipe 42.

For example, the first plate 34 has a thickness E1 along the second direction Y, and the second part 28 has a thickness E2 along the second direction Y, the thickness E1 being larger than the thickness E2. For example, the second plate 36 has a thickness E3 along the third direction Z, and the fourth part 32 has a thickness E4 along the third direction Z, the thickness E3 being larger than the thickness E4 of the fourth part.

The thicknesses E1 and E3 are for example comprised between 4mm and 8mm.

The thicknesses E2 and E4 are for example comprised between 0.2mmmm and 3mm. The thicknesses E2 and E4 are for example about 0.6mm.

As a less preferred variant (not shown), the first plate 34 and the second plate 36 are not formed by the first part 26 and the third part 30 of the casing 24. The first plate 34 and the second plate 36 may be distinct the casing 24, and both in plane contact with the first part 26 and the third part 30 respectively. The first plate 34 and the second plate 36 altogether for example have an L-shape in view along the first direction X, and are advantageously integral with each other. In this case, the first plate 34 and the second plate 36 are in indirect thermal contact with the stack 22 and the electrolyte 23 via the casing 24.

The other wall 54 for example has a U-shaped cross-section perpendicularly to the path 56, and is fixed to the internal wall 48, or as a variant (not shown) to the external wall 50, so as to form a duct 60 for the fluid 58.

The phase change material 38 advantageously extends in the inner volume 52 in the first plate 34 and in the second plate 36.

The phase change material 38 has a melting temperature comprised between 10°C and 120°C, preferably between 10°C and 40°C.

For example, the phase change material 38 comprises n-octadecane, n-nonadecane, or n-eicosane.

As a variant (not shown), the first passive cooling system 40 comprises at least a heat pipe or an oscillating heat pipe instead of, or in addition to, the loop heat pipe 42.

In other variants (not shown), the first passive cooling system 40 may comprise several loop heat pipes and/or several oscillating heat pipes and/or several heat pipes.

Loop heat pipes, oscillating heat pipes and heat pipes are known in themselves and will not be described in detail. They include a phase change fluid circulating between an evaporator region, where the fluid receives heat, and a condenser region, where the fluid releases heat. Loop heat pipes, oscillating heat pipes and heat pipes are passive heat transporting systems, since the fluid circulation is obtained only via temperature differences and sometimes capillarity. In an oscillating heat pipe, the fluid comprises slugs of liquid and vapor in a continuous loop. Loop heat pipes and oscillating heat pipes may include fins in their evaporator and condenser regions.

In this case, the evaporator 44 is adapted for absorbing heat from the first plate 34, and the condenser 46 is adapted for releasing heat to the second plate 36.

Advantageously, the evaporator 44 extends in a portion 62 of the first plate 34, said portion being closer to the fourth part 32 than to the third part 30 along the third direction Z.

In the example, the first passive cooling system 40 comprises the duct 60 and the fluid 58.

The fluid 58 is adapted for circulating in the duct 60 from the evaporator 44 to the condenser 46, and from the condenser to the evaporator.

The duct 60 for example comprises, in the evaporator 44 and the condenser 46, successive sections 64 from a fluid circulation point of view, and U-shaped sections 66 in view along the second direction Y.

The successive sections 64 for example extend along the first direction X and are connected to each other by the U-shaped sections 66.

The operation of the battery 10 stems from its structure and will be briefly described in order to illustrate a process according to the invention.

During charging and discharging, heat is produced in the electrochemical cells 14A, 14B, 14C.

In each of the electrochemical cells 14A, 14B, 14C, part of said heat is received by the first plate 34 and by the second plate 36 (whether the plates are formed by the casing 24 or are separate elements in thermal contact with the casing). The phase change material 38 advantageously present in the inner volume 52 in the first plate 34 and the second plate 36 makes sure that temperature does not go too high in each electrochemical cell, by absorbing some of the heat due to a phase change. The presence of the first passive cooling system 40 ensures that the PCM does not change its phase quickly by carrying out that excessive heat towards the cooling plate 12.

Heat is also absorbed by the evaporator 44 from the first plate 34. Heat is released by the condenser 44 to the second plate 36, and heat is received by the cooling plate 12 from the second plate 36.

Heat is then evacuated from the cooling plate 12 for example by the cooling system 16.

Thanks to the above features, the risk of hot spots or too strong gradients appearing in the battery 10 is reduced and the battery is very compact.

The phase change material 38 advantageously acts as a passive cooling system in order to prevent the temperature from raising when heat is released in the electrochemical cells 14A, 14B, 14C. Besides, the first passive cooling system 40, thanks to the loop heat pipe 42, the oscillating heat pipe or the heat pipe, is able to convey heat from the first plate 34 to the second plate 36, the heat being then absorbed by the cooling plate 12. The phase change material 38 and the first passive cooling system 40 manage to keep the temperature more homogenous than in prior art batteries, in particular in the top part of the electrochemical cells 14A, 14B, 14C.

The homogenous temperature distribution helps reducing degradation in the battery 10, for example by reducing lithium plating. It increases the life of the battery 10.

The phase change material 38 and the first passive cooling system 40, being both passive, are unlikely to fail.

The embodiment in which the first plate 34 and the second plate 36 are formed by the casing 24 is particularly interesting in terms of compactness.

Thanks to the optional feature of having the electrochemical cells 14A, 14B, 14C in thermal contact with each other, the first plate 34 of one electrochemical cell can absorb heat from the second part 28 of the casing 24 of a neighboring electrochemical cell.

Thanks to the optional feature of having the evaporator 44 in the portion 62 of the first plate 34, closer to the fourth part 32 than to the third part 30 along the third direction Z, the first passive cooling system 40 is able to extract excess heat where it more likely to appear, i.e. away from the cooling plate 12.

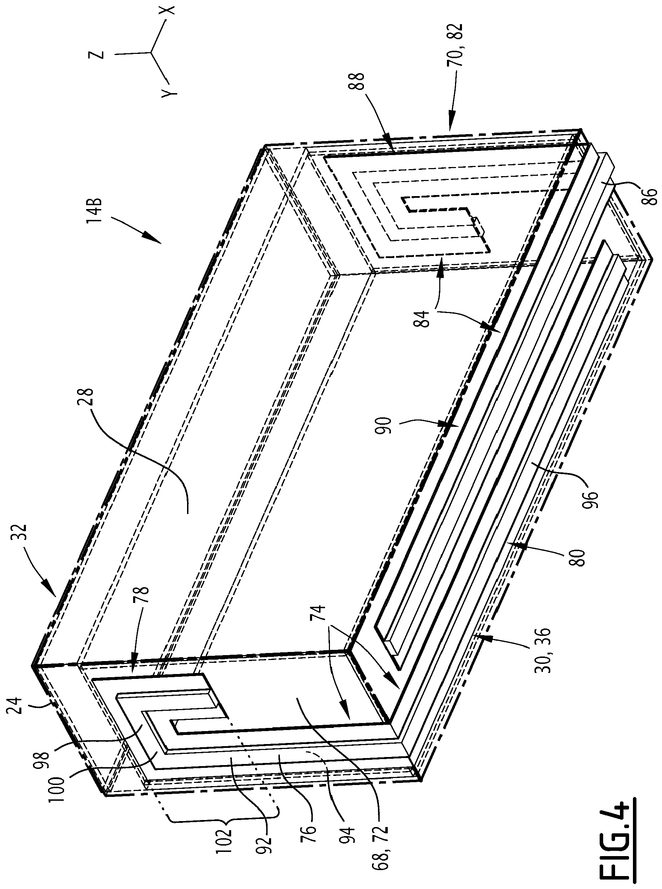

With reference to Figure 4, a variant of the battery 10 will now be described. That variant is analogous to the battery represented in Figure 1 to 3. Similar elements will not be described again. Only the differences will be described hereafter.

In that variant, the casing 24 surrounding the stack 22 and the electrolyte 23 comprises a first part 68 and a second part 70 that are opposite each other in the first direction X, and not in the second direction Y.

In the variant, the electrochemical cell 14B includes a first plate 72 either formed by the first part 68 or in plane contact with the first part, the first plate 72 being in thermal contact with the stack 22 and adapted for receiving heat from the stack. The electrochemical cell 14B comprises a first passive cooling system 74 comprising at least a heat pipe 76, the first passive cooling system comprising an evaporator 78 located in the first plate 72 and adapted for absorbing heat from the first plate, and a condenser 80 located in the second plate 36 and adapted for releasing heat to the second plate.

Advantageously, the electrochemical cell 14B further includes a third plate 82 either formed by the second part 70 or in plane contact with the second part, the third plate being in thermal contact with the stack 22 and the electrolyte 23 adapted for receiving heat from the stack and the electrolyte.

The electrochemical cell 14B further comprises a second passive cooling system 84 comprising at least a heat pipe 86, the second passive cooling system comprising an evaporator 88 located in the third plate 82 and adapted for absorbing heat from the third plate, and a condenser 90 located in the second plate 36 and adapted for releasing heat to the second plate.

The electrochemical cell 14B may comprise a phase change material (not represented) in the first plate 72 and/or in the third plate 82.

Advantageously, the first passive cooling system 74 and the second passive cooling system 84 are structurally analogous to each other. Only the first passive cooling system 74 will be described.

Heat pipes are known in themselves and will not be described in detail. They include a phase change fluid circulating between an evaporator region, where the fluid receives heat, and a condenser region, where the fluid releases heat. The fluid circulation is obtained only via temperature differences and sometimes capillarity.

The heat pipe 76 of the first passive cooling system 74 comprises a duct 92 and a fluid 94 adapted for circulating in the duct.

The duct 92 has a section 96 in the condenser 80, said section extending in the first direction X, and a U-shaped section 98 in view along the first direction X.

The U-shaped section 98 is located the evaporator 78, the "U" of the U-shaped section having a base 100 pointing away from the third part 30 in the third direction Z.

Advantageously, the evaporator 78 extends in a portion 102 of the first plate 72, said portion being closer to the fourth part 32 than to the third part along the third direction Z.

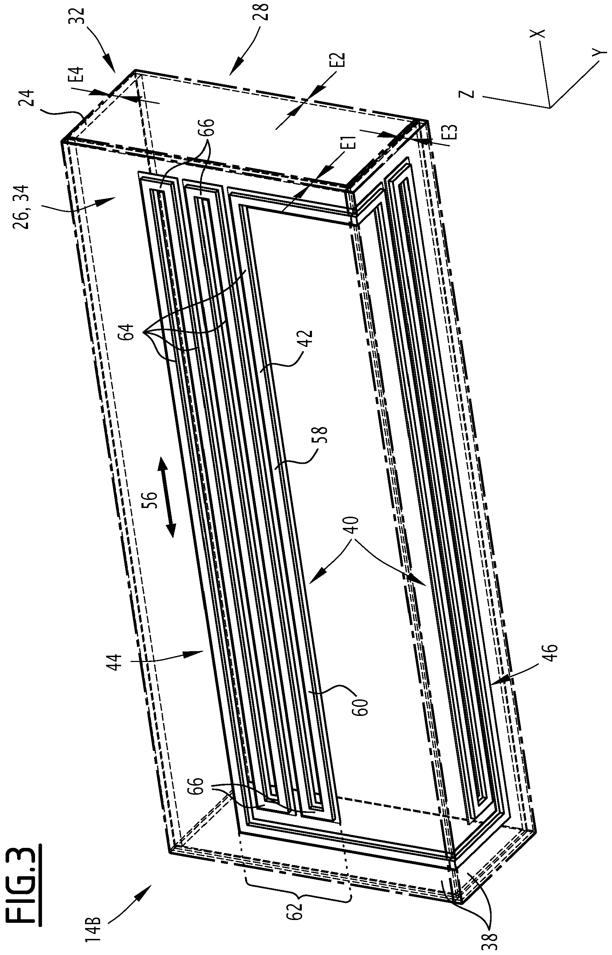

The first passive cooling system 74 operates in the same manner as the first passive cooling system 40 shown in figure 3, by receiving heat from the first plate 72 and releasing heat to the second plate 36.

## Claims

1. A battery (10) for an electrical or hybrid vehicle, the battery (10) comprising:
- a cooling plate (12) extending along a first direction (X) and a second direction (Y) perpendicular to the first direction (X), and
- at least a set of electrochemical cells (14A, 14B, 14C) extending successively along the second direction (Y),
each of the electrochemical cells (14A, 14B, 14C) including:
- at least a stack (22) of electrochemical elements and an electrolyte (23),
- a casing (24) surrounding the stack (22) and the electrolyte (23), and comprising a first part (26; 68) and a second part (28; 70) opposite each other in one of the second direction (Y) and the first direction (X), and a third part (30) and a fourth part (32) opposite each other in a third direction (Z) perpendicular to the first direction (X) and to the second direction (Y),
- a first plate (34; 72) either formed by the first part (26; 68), or in plane contact with the first part (26; 68), the first plate (34; 72) being in thermal contact with the stack (22) and the electrolyte (23) and adapted for receiving heat from the stack (22) and the electrolyte (23),
- a second plate (36) either formed by the third part (30), or in plane contact with the third part (30), the second plate (36) being in thermal contact with the stack (22) and the electrolyte (23) and adapted for receiving heat from the stack (22) and the electrolyte (23), the cooling plate (12) being in thermal contact with the second plate (36) and adapted for receiving heat from the second plate (36), and
- a first passive cooling system (40; 74) comprising at least a loop heat pipe (42), an oscillating heat pipe, or a heat pipe, the first passive cooling system (40; 74) comprising an evaporator (44; 78) located in the first plate (34, 72) and adapted for absorbing heat from the first plate (34, 72), and a condenser (46; 80) located in the second plate (36) and adapted for releasing heat to the second plate (36).

2. The battery (10) according to claim 1, further comprising an active cooling system (16) adapted for extracting heat from the cooling plate (12).

3. The battery (10) according to claim 1 or 2, wherein the first plate (34; 72) and the second plate (36) are both distinct from the casing (24), and altogether have an L-shape in view along the other of the second direction (Y) and the first direction (X).

4. The battery (10) according to any one of claims 1 to 3, wherein each of the electrochemical cells (14A, 14B, 14C) further includes at least a phase change material (38) within the first plate (34; 72) and the second plate (36), wherein the phase change material (38) has a melting temperature comprised between 10°C and 120°C.

5. The battery (10) according to claim 4, wherein the first plate (34; 72) and the second plate (36), considered as a whole, comprise an internal wall (48) and an external wall (50) with respect to the stack (22) and the electrolyte (23), the internal wall (48) and the external wall (50) defining, between themselves, an inner volume (52) extending in the first plate (34; 72) and in the second plate (36), the phase change material (38) extending in the inner volume (52) in the first plate (34; 72) and in the second plate (36).

6. The battery (10) according to claim 5, wherein the first plate (34; 72) and the second plate (36), considered as a whole, comprise another wall (54) extending along a path (56) of a fluid (58) of the loop heat pipe (42), the oscillating heat pipe or the heat pipe, the other wall (54) having a U-shaped cross-section perpendicularly to the path (56), and being fixed to the internal wall (48) or the external wall (50) so as to form a duct (60) for the fluid (58).

7. The battery (10) according to any one of claim 1 to 6, wherein the first passive cooling system (40; 74) comprises a duct (60) and a fluid (58) adapted for circulating in the duct (60) from the evaporator (44; 78) to the condenser (46; 80), and from the condenser (46; 80) to the evaporator (44; 78), the duct (60) comprising, in the evaporator (44; 78) and the condenser (46; 80), successive sections (64) from a fluid (58) circulation point of view, and U-shaped sections (66) in view along said one of the second direction (Y) and the first direction (X), the successive sections (64) extending along said other one of the second direction (Y) and the first direction (X) and being connected to each other by the U-shaped sections (66).

8. The battery (10) according to any one of claim 1 to 7, wherein the evaporator (44; 78) extends in a portion (62) of the first plate (34; 72), said portion (62) being closer to the fourth part (32) than to the third part (30) along the third direction (Z).

9. The battery (10) according to any one of claim 1 to 8, wherein:
- the first plate (34) has a thickness (E1) along said one of the second direction (Y) and the first direction (X), and the second part (28) has a thickness (E2) along said one of the second direction (Y) and the first direction (X), the thickness (E1) of the first plate (34) being larger than the thickness (E2) of the second part (28), and
- the second plate (36) has a thickness (E3) along the third direction (Z), and the fourth part (32) has a thickness (E4) along the third direction (Z), the thickness (E3) of the second plate (36) being larger than the thickness (E4) of the fourth part (32).

10. The battery (10) according to any one of claims 1 to 9, wherein:
- the first part (26) and the second part (28) are opposite each other in the second direction (Y), and
- for any two successive electrochemical cells of the electrochemical cells (14A, 14B, 14C) of said set, the first plate (34) of one of said two successive electrochemical cells is in thermal contact with the second part (28) of the casing (24) of the other one of said two successive electrochemical cells.

11. The battery (10) according to any one of claim 1 to 9, wherein the first part (68) and the second part (70) are opposite each other in the first direction (X), the first passive cooling system (74) comprising a heat pipe (76).

12. The battery (10) according to claim 11, wherein each of the electrochemical cells (14A, 14B, 14C) further comprises:
- a third plate (82) either formed by the second part (70) or in plane contact with the second part (70), the third plate (82) being in thermal contact with the stack (22) and the electrolyte (23), and adapted for receiving heat from the stack (22) or the electrolyte (23), and
- a second passive cooling system (84) comprising a heat pipe (86), the second passive cooling system (84) comprising an evaporator (88) located in the third plate (82) and adapted for absorbing heat from the third plate (82), and a condenser (90) located in the second plate (36) and adapted for releasing heat to the second plate (36).

13. The battery (10) according to claim 11 or 12, wherein the heat pipe (76) of the first passive cooling system (74) comprises a duct (92) and a fluid (94) adapted for circulating in the duct (92), the duct (92) having a section (96) in the condenser (80) of the first passive cooling system (74), said section (96) extending in the first direction (X), and a U-shaped section (98) in view along the first direction (X), the U-shaped section (98) being located in the evaporator (78) of the first passive cooling system (74), the "U" of the U-shaped section (98) having a base (100) pointing away from the third part (30) in the third direction (Z).

14. The battery (10) according to any one of claim 11 to 13, wherein the evaporator (78) of the first passive cooling system (74) extends in a portion (102) of the first plate (72), said portion (102) being closer to the fourth part (32) than to the third part (30) along the third direction (Z).

15. A process for cooling a battery (10), comprising:
- providing a battery (10) according to any one of claims 1 to 14,
- a step of receiving heat by the first plate (34; 72) and the second plate (36) from the stack (22) and the electrolyte (23),
- a step of absorbing heat by the evaporator (44; 78) of the first passive cooling system (40; 74) from the first plate (34; 72),
- a step of releasing heat by the condenser (46; 80) of the first passive cooling system (40; 74) to the second plate (36), and
- a step of receiving heat by the cooling plate (12) from the second plate (36).
